# EUROPÄISCHE PATENTSCHRIFT

(11) **EP 3 131 941 B1**
(45) Veröffentlichungstag und Bekanntmachung des Hinweises auf die Patenterteilung: **07.02.2018**
(21) Anmeldenummer: 15717477.2
(22) Anmeldetag: 15.04.2015
(51) Int. Cl.: C08G 18/76, C07C 273/18, C07C 275/40, C09D 5/04, C08G 18/28, C08K 5/21, C08G 18/80, C08K 5/20, C08G 18/32

(54) **RHEOLOGIESTEUERUNGSMITTEL UMFASSEND EINE WIRKSTOFFKOMBINATION**
RHEOLOGY CONTROL AGENTS COMPRISING AN ACTIVE SUBSTANCE COMBINATION
AGENTS RHÉOLOGIQUES COMPRENANT UNE ASSOCIATION DE PRINCIPES ACTIFS

(30) Priorität: 15.04.2014 DE 102014005474
(43) Veröffentlichungstag der Anmeldung: 22.02.2017
(73) Patentinhaber: BYK-Chemie GmbH, 46483 Wesel (DE)
(72) Erfinder: LEUTFELD, Daniela, 46485 Wesel (DE); EBERHARDT, Marc, 46485 Wesel (DE); NAGELSDIEK, René, 46499 Hamminkeln (DE); BÜHNE, Sylvia, 47198 Duisburg (DE); OMEIS, Jürgen, 46286 Dorsten-Lembeck (DE); MORHENN, Bianca, 47829 Krefeld (DE)
(74) Vertreter: Leifert & Steffan
(86) Internationale Anmeldenummer: PCT/EP2015/058208
(87) Internationale Veröffentlichungsnummer: WO 2015/158792

(56) Entgegenhaltungen:
- EP-A1- 0 006 252
- EP-A1- 1 188 779
- DE-A1-102008 059 702

## Beschreibung

Die vorliegende Erfindung betrifft Rheologiesteuerungsmittel, die eine Wirkstoffkombination mindestens zweier Wirkstoffe umfassen, Zubereitungen, welche die Rheologiesteuerungsmittel enthalten, ein Verfahren zur Herstellung der Rheologiesteuerungsmittel und deren Verwendung zur Verdickung und Thixotropierung verschiedener Zubereitungen.

Rheologiesteuerungsmittel, hierin auch als Rheologieadditive bezeichnet, eignen sich grundsätzlich zur Viskositätserhöhung verschiedener Zubereitungen und zur Optimierung des Fließverhaltens der Zubereitungen für die jeweilige Anwendung. Angestrebt werden auch die Verbesserung der Lagerstabilität und der Verarbeitbarkeit solcher Zubereitungen wie beispielsweise Beschichtungsmitteln sowie die Erzielung höherer Schichtdicken, wenn derartige Beschichtungsmittel auf Substrate aufgebracht werden.

Es ist bekannt, dass durch den Einsatz von Rheologieadditiven die Lagerstabilität einer Zubereitung optimiert werden kann, indem die Neigung zu Separation, Sedimentation und Synerese deutlich verringert wird. Hierzu werden bevorzugt Produkte mit thixotropem Fließverhalten eingesetzt, welche in Ruhe eine Strukturviskosität ausbilden und die elastischen Anteile des Systems erhöhen.

Um die Rheologie von flüssigen Systemen, insbesondere flüssigen Beschichtungsmittelsystemen, zu steuern, werden als rheologische Hilfsstoffe vorwiegend organisch modifizierte Bentonite, Kieselsäuren, hydriertes Rizinusöl und Polyamidwachse eingesetzt.

Nachteilig am Einsatz dieser rheologischen Hilfsstoffe ist, dass diese meist in Form von trockenen Feststoffen vorliegen. Folglich werden deshalb besagte rheologische Hilfsstoffe vor dem Einsatz unter Verwendung von Lösemitteln und Scherkräften zunächst zu einem Halbfabrikat aufgeschlossen. Alternativ können die noch nicht aufgeschlossenen rheologischen Hilfsstoffe auch so eingesetzt werden, dass diese durch gezielte Temperatursteuerung in das flüssige Anwendungssystem, beispielsweise ein Beschichtungsmittelsystem eingebracht werden. Erfolgt diese Temperatursteuerung nicht gemäß den Zielvorgaben, so treten im fertigen Beschichtungssystem typischerweise Kristallite auf, die zu Fehlern in der Beschichtung führen können. Ein genereller Nachteil solcher rheologischer Hilfsstoffe besteht darin, dass, diese Trübungen und Schleierbildungen (Haze), insbesondere in klaren, transparenten Beschichtungen verursachen können. Außerdem ist der Umgang mit trockenen, pulverförmigen Produkten, die Stäube bei der Verarbeitung verursachen können, unerwünscht.

Eine flüssige Anwendungsalternative zu diesen festen Rheologiesteuerungsmitteln stellen Lösungen spezieller Harnstoffverbindungen dar. In den Beispielen der EP-A-1188779 werden Lösungen von speziellen Harnstoffverbindungen in Dimethylacetamid und N-Methyl-Pyrrolidon beschrieben. In der EP-A-0006252 wurde in den Beispielen Lösungen von Harnstoffverbindungen in Dimethylsulfoxid, Dimethylformamid und N-Methyl-Pyrrolidon offenbart. Rheologisch wirksame Lösungen werden beispielsweise auch in der US 4,857,111 B1 offenbart. Andere Entwicklungen führten zu rheologisch wirksamen Stoffen, wie sie beispielsweise in der US 8,552,132 B2 offenbart sind.

Die rheologiesteuernden Eigenschaften gelöster Harnstoffverbindungen sind meist zwar recht gut, wobei jedoch in vielen Fällen der Wunsch nach einem noch weiter optimierten Verhalten besteht. Ein optimiertes Verhalten äußert sich häufig nicht nur in verbesserter rheologischer Wirksamkeit, sondern auch in einer breiten Verträglichkeit in anwendungsrelevanten Formulierungen, beispielsweise unterschiedliche Bindemittel enthaltenden Systemen.

Ein weiterer Aspekt, der im Zusammenhang mit in flüssiger Form bereitgestellten Rheologiesteuerungsmitteln zu beachten ist, ist deren Lagerstabilität. So können längere Lagerzeiten oder ein erhöhter Lagerstress, beispielsweise bei einer Lagerung unter Temperaturschwankungen, zu einer verminderten Lagerstabilität und damit einhergehend einer verringerten Wirksamkeit im Zielsystem führen.

Es besteht daher nach wie vor ein Bedarf an hinsichtlich der rheologischen Wirksamkeit und Lagerstabilität verbesserten Rheologiesteuerungsmittel. Die rheologische Wirksamkeit einer Zubereitung kann beispielsweise anhand des Standvermögens, das heißt der Ablaufgrenze eines mit dem Rheologiesteuerungsmittel formulierten Beschichtungsmittels ermittelt werden.

Weiterhin werden Rheologiesteuerungsmittel gefordert, die eine breite Verträglichkeit in anwendungsrelevanten Formulierungen wie beispielsweise Lacken besitzen. Insbesondere dürfen damit hergestellte Lacke möglichst keine Stippen-, Schleier- und/oder Trübungsbildung aufweisen.

Probleme der Lagerstabilität ergeben sich vorwiegend dann, wenn die Lagerzeiträume groß und die Lagerbedingungen schwankend sind. Unter schwankenden Lagerbedingungen sind insbesondere solche zu verstehen, bei welchen die gelagerten, mit Rheologiesteuerungsmitteln additivierten Zubereitungen teils extremen Temperaturschwankungen ausgesetzt sind. Solche können beispielsweise in nichtbeheizten Lagerhallen im Wandel der Jahreszeiten auftreten oder beim Transport.

Somit bestand die Aufgabe der vorliegenden Erfindung insbesondere in der Bereitstellung eines verbesserten entsprechend qualitativ hochwertigen, gut wirksamen Rheologiesteuerungsmittels mit verbesserter Lager- und Transportstabilität, auch der damit hergestellten Zubereitungen. Handelt des sich bei den Zubereitungen um Beschichtungsmittel, so sollten diese nach Lagerung, insbesondere unter Temperaturstress, eine gegenüber nicht erfindungsgemäß additivierten Beschichtungsmitteln geringere Neigung zur Stippenbildung besitzen und somit eine gute Appearance aufweisen. Außerdem sollte Gelstärke und Standvermögen der Zubereitungen gegenüber mit gewöhnlichen Rheologiesteuerungsmitteln versehenen Zubereitungen verbessert sein. Weitere Verbesserungen sind der folgenden Beschreibung und den Beispielen entnehmbar.

Vorstehende Aufgaben wurden gelöst durch die Bereitstellung eines Rheologiesteuerungsmittels enthaltend mindestens zwei verschiedene Wirkstoffe der weiter unten beschriebenen Formeln (A) und (B) (im Folgenden auch als Wirkstoffe (A) und (B) bezeichnet), wobei beide Wirkstoffe zwingend mindestens ein Strukturelement der Formel 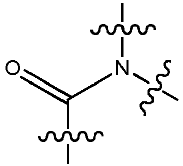 aufweisen, dieses Strukturelement jedoch in beiden Wirkstoffen an äußerst unterschiedliche weitere Molekülfragmente gebunden ist.

Konkret wurden die obigen Aufgaben gelöst durch Bereitstellung eines Rheologiesteuerungsmittels, umfassend
10 bis 95 Gew.-% mindestens eines Wirkstoffs der allgemeinen Formel (A) 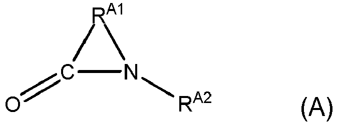 worin
R^{A1} für einen zweibindigen, gesättigten, acyclischen, unsubstituierten oder methylsubstituierten Rest steht, der durch die Bindung an den Rest O=C-N-R^{A2} einen Ring mit 5 bis 8 Ringatomen bildet, und der Rest R^{A2} eine Alkylgruppe mit 3 bis 5 Kohlenstoffatomen darstellt,
und
5 bis 90 Gew.-% mindestens eines Wirkstoffs der allgemeinen Formel (B)

R^{B4}OOC-NH-R^{B3}-NH-CO-NR^{B2}-(CH₂)ₓ-R^{B1}-(CH₂)ₓ-NR^{B2}-CO-NH-R^{B3}-NH-COOR^{B4} (B)

worin
der Rest R^{B1} ausgewählt wird aus der Gruppe der unsubstituierten, methyl- und/oder ethylsubstiuierten Phenylen-, Naphthylen-, Phenanthrylen- und Anthracylengruppen, die Reste R^{B2} unabhängig voneinander für Wasserstoff oder Alkylreste mit 1 bis 3 Kohlenstoffatomen stehen,
die Reste R^{B3} unabhängig voneinander für unsubstituierte, methyl- und/oder ethylsubstituierte Phenylen-, Naphthylen-, Phenanthrylen- und Anthracylengruppen stehen, und
die Reste R^{B4} unabhängig voneinander ausgewählt werden aus der Gruppe bestehend aus linearen oder verzweigten Alkyl- oder Alkenylgruppen mit jeweils 7 bis 15 Kohlenstoffatomen und Resten R^{B5}(O-R^{B6})ₙ, worin der Rest R^{B5} für eine Alkylgruppe mit 1 bis 6 Kohlenstoffatomen steht, die n Reste R^{B6} unabhängig voneinander für Ethylen und/oder Propylen stehen und n = 1 bis 14, vorzugsweise 2 bis 13 ist,
die Ziffern x unabhängig voneinander für 0, 1, 2 oder 3 stehen,
und die prozentualen Angaben auf das Gesamtgewicht des Rheologiesteuerungsmittels bezogen sind.

Der Begriff "gesättigt" bedeutet im Sinne der vorliegenden Erfindung, dass das betreffende Strukturelement keine dauerhafte Kohlenstoff-Kohlenstoff-Mehrfachbindung aufweist. Ein Beispiel für eine nicht dauerhafte Kohlenstoff-Kohlenstoff-Mehrfachbindung ist eine Kohlenstoff-Kohlenstoff-Doppelbindung, welche in Folge der Keto-Enol-Tautomerie formulierbar ist.

Die vorgenannten Wirkstoffe (A) und (B) sowie die weiter unten angeführte Zusatzstoffkomponente (Z) können eine oder mehrere unter die jeweilige Definition der jeweiligen Komponente fallende Spezies enthalten. Alle prozentualen Grenzen für die Komponenten gelten sowohl für den Fall, dass die Komponente jeweils nur aus einer Spezies besteht als auch für den Fall dass mehrere Spezies die jeweilige Komponente bilden, wobei dann die Summe der Gewichtsanteile der einzelnen Spezies in den prozentualen Grenzen liegen muss.

Für den Fall, dass eine oder mehrere der Komponenten auf eine spezielle Spezies oder auf eine Gruppe spezieller Spezies beschränkt werden, so dürfen die von dieser Komponente nunmehr ausgeschlossenen Spezies zwar noch im erfindungsgemäßen Rheologiesteuerungsmittel enthalten sein, nicht jedoch in einer Menge, die in Summe mit den in der jeweiligen Komponente verbliebenen Spezies die ursprünglichen prozentualen Grenzen der Komponente überschreitet.

Werden beispielsweise in einer besonderen Ausführungsform der Erfindung vom Wirkstoff (B) solche Spezies ausgeschlossen, bei welchen x = 2 oder 3 ist, so gilt für die weiterhin im Wirkstoff (B) verbliebenen Spezies mit x = 0 oder 1, dass diese in einer Menge von 5 bis 90 Gew.-% bezogen auf das Gesamtgewicht des Rheologiesteuerungsmittels enthalten sein dürfen. Sind die verbliebenen Spezies jedoch nur in einem Anteil von 80 Gew.-% enthalten, so dürfen maximal 10 Gew.-%, bezogen auf das Gesamtgewicht des Rheologiesteuerungsmittels an den von der eingeschränkten Definition des Wirkstoffs (B) ausgeschlossenen Spezies mit x = 2 oder 3 enthalten sein.

Solche Spezies, die ursprünglich einer der Komponenten (A) oder (B) zurechenbar waren, jedoch durch Spezifizierung der jeweiligen Komponente nicht mehr unter deren Definition fallen, werden dann als Spezies der Zusatzstoffkomponente (Z), wie unten definiert, aufgefasst. Sie unterliegen dann zwingend hinsichtlich ihrer prozentualen Anteile, zusammen mit den in der Komponente, aus der sie ausgeschlossen wurden, verbliebenen Spezies, den ursprünglichen prozentualen Grenzen der jeweiligen Komponente, wie im vorangegangen Absatz exemplifiziert. Sie unterliegen vorzugsweise aber auch zusätzlich den vorzugsweise für die Zusatzstoffkomponente (Z) angegebenen Grenzen.

In einer besonderen Ausführungsform der Erfindung enthält der Rest R^{A1} des Wirkstoffs (A) wenigstens ein Kohlenstoffatom als Ringatom, welches einen Methylsubstituenten trägt. Vorzugsweise trägt der Rest R^{A1} keine weiteren Substituenten und ganz besonders bevorzugt nur einen Methylsubstituenten.

In einer besonders bevorzugten Ausführungsform des erfindungsgemäßen Rheologiesteuerungsmittels ist der Rest R^{A1} des Wirkstoffs (A) völlig unsubstituiert. Ganz besonders bevorzugt handelt es sich in diesem Fall beim Rest R^{A1} um einen n-Propylen- oder n-Butylen-Rest, einen Rest, der höchstens ein Sauerstoffatom als Ringatom enthält und dieses nicht direkt an den Rest O=C-N-R^{A2} gebunden ist, wie insbesondere einen Rest CH₂-O-CH₂, CH₂-O-CH₂-CH₂ oder CH₂-CH₂-O-CH₂.

Besonders bevorzugt enthält der Rest R^{A1} des Wirkstoffs (A) ausschließlich Kohlenstoffatome als Ringatome, wobei diese ganz besonders bevorzugt unsubstituiert sind und jeweils an zwei Wasserstoffatome gebunden sind.

In einer weiteren Ausführungsform des Wirkstoffs (A) ist der Rest R^{A1} ein Kohlenwasserstoffrest, der durch höchstens ein Sauerstoffatom als Ringatom unterbrochen ist.

In einer bevorzugten Ausführungsform des erfindungsgemäßen Rheologiesteuerungsmittel bildet der Rest R^{A1} des Wirkstoffs (A) mit den Gruppen O=C und N-R^{A2} einen Ring mit 5 bis 7 Ringatomen.

Für alle der vorstehend genannten Ausführungsformen des Wirkstoffs (A) gilt, dass dieser mit den nachstehend aufgeführten Wirkstoffen (B) beliebig kombiniert werden kann, um erfindungsgemäße Rheologiesteuerungsmittel zu erhalten. Dies gilt ganz besonders für die als bevorzugt bezeichneten Wirkstoffe (A).

Im Wirkstoff (B) steht der Rest R^{B1} vorzugsweise für eine unsubstituierte oder methylsubstituierte Phenylen- oder Naphthylengruppe, ganz besonders bevorzugt für eine Phenylengruppe, insbesondere eine m-Phenylengruppe oder eine p-Phenylengruppe. Derartige Reste R^{B1} erweisen sich als vorteilhaft bei der Durchführung des hierin ebenfalls beschriebenen erfindungsgemäßen Verfahrens zur Herstellung der Rheologiesteuerungsmittel. Es wird vermutet, dass dies auf eine geringere sterische Abschirmung zurückzuführen ist.

Bevorzugt sind Rheologiesteuerungsmittel, wobei die Ziffern x in der Formel (B) des Wirkstoffs (B) unabhängig voneinander für 0 oder 1 stehen.

Besonders bevorzugt steht der Rest R^{B1} für eine m-Phenylengruppe oder eine p-Phenylengruppe und x für 0 oder 1, ganz besonders bevorzugt steht x für 1.

Besonders bevorzugt steht der Rest R^{B2} für Wasserstoff.

In einer weiteren besonders bevorzugten Ausführungsform der Wirkstoffe der Formel (B) steht der Rest R^{B1} für eine m-Phenylengruppe oder eine p-Phenylengruppe, der Rest R^{B2} für Wasserstoff und x für 0 oder 1.

Besonders bevorzugt steht der Rest R^{B3} für eine unsubstituierte oder methylsubstituierte Phenylengruppe, ganz besonders bevorzugt für eine monomethylsubstituierte m-Phenylengruppe wie beispielsweise eine 6-Methyl-m-Phenylengruppe.

In einer weiteren besonders bevorzugten Ausführungsform der Wirkstoffe der Formel (B) steht der Rest R^{B1} für eine m-Phenylengruppe oder eine p-Phenylengruppe, der Rest R^{B2} für Wasserstoff, R^{B3} für eine unsubstituierte oder methylsubstituierte Phenylengruppe, ganz besonders bevorzugt für eine monomethylsubstituierte m-Phenylengruppe und x für 0 oder 1, insbesondere für 1.

Weiter bevorzugt sind Rheologiesteuerungsmittel deren Reste R^{B4} unabhängig voneinander ausgewählt werden aus der Gruppe bestehend aus linearen Alkylgruppen mit jeweils 7 bis 15 Kohlenstoffatomen und Resten R^{B5}(O-R^{B6})ₙ, worin der Rest R^{B5} für eine Alkylgruppe mit 1 bis 4 Kohlenstoffatomen steht, die n Reste R^{B6} unabhängig voneinander für Ethylen und/oder Propylen stehen und n = 1 bis 14, vorzugsweise 2 bis 13, ist. Unter den vorgenannten Resten R^{B4} werden vorteilhaft insbesondere die linearen Alkylgruppen mit 7 bis 15 Kohlenstoffatomen, noch bevorzugter 8 bis 15 Kohlenstoffatomen und ganz besonders bevorzugt 9 bis 14 Kohlenstoffatomen wie beispielsweise 10 bis 13 Kohlenstoffatomen eingesetzt. In einer ganz besonders bevorzugten Ausführungsform handelt es sich bei den Resten R^{B4} um Reste gewählt aus der Gruppe bestehend aus n-Decyl, n-Undecyl, n-Dodecyl, n-Tridecyl und n-Tetradecyl. Die in diesem Absatz genannten Bevorzugungen gelten nicht ausschließlich, aber insbesondere für den Einsatz der Rheologiehilfsmittel in lösemittelhaltigen oder lösemittelfreien, vorzugsweise nicht-wässrigen Zubereitungen.

In einer besonders bevorzugten Ausführungsform der erfindungsgemäßen Rheologiesteuerungsmittel gilt, dass
der Rest R^{A1} ein unsubstituierter oder methylsubstituierter Alkylenrest ist, der durch die Bindung an den Rest O=C-N-R^{A2} einen Ring mit 5 oder 6 Ringatomen bildet,
der Rest R^{B1} eine unsubstituierte oder methylsubstituierte Phenylen- oder Naphthylengruppe ist,
die Reste R^{B2} unabhängig voneinander für Wasserstoff, Methyl oder Ethyl stehen, die Reste R^{B3} unabhängig voneinander für unsubstituierte oder methylsubstituierte Phenylen- oder Naphthylengruppen stehen, und
die Reste R^{B4} unabhängig voneinander ausgewählt werden aus der Gruppe bestehend aus linearen oder verzweigten Alkylgruppen mit jeweils 7 bis 15 Kohlenstoffatomen und Resten R^{B5}(O-R^{B6})ₙ, worin der Rest R^{B5} für eine Alkylgruppe mit 1 bis 4 Kohlenstoffatomen steht, die n Reste R^{B6} unabhängig voneinander für Ethylen und/oder Propylen stehen und n = 1 bis 14, vorzugsweise 2 bis 13, ist.

In einer ganz besonders bevorzugten Ausführungsform der erfindungsgemäßen Rheologiesteuerungsmittel gilt, dass
der Rest R^{A1} ein unsubstituierter Alkylenrest ist, der durch die Bindung an den Rest O=C-N-R^{A2} einen Ring mit 5 oder 6 Ringatomen bildet,
der Rest R^{B1} eine unsubstituierte Phenylengruppe ist,
die Reste R^{B2} unabhängig voneinander Wasserstoff, Methyl oder Ethyl, vorzugsweise Wasserstoff sind,
die Reste R^{B3} unabhängig voneinander unsubstituierte oder methylsubstituierte Phenylengruppen sind, besonders bevorzugt methylsubstituierte Phenylengruppen, und
die Reste R^{B4} unabhängig voneinander ausgewählt werden aus der Gruppe bestehend aus linearen oder verzweigten Alkylgruppen mit jeweils 7 bis 15 Kohlenstoffatomen.

Ganz besonders bevorzugt gilt für alle Ausführungsformen der Erfindung, bei welchen ein Rest R^{B5} vorhanden ist, dass es sich um einen Alkylrest mit 1 bis 4 Kohlenstoffatomen wie beispielsweise einen Methylrest oder n-Butylrest handelt.

Ganz besonders bevorzugt gilt für alle Ausführungsformen der Erfindung, bei welchen ein Rest R^{B6} vorhanden ist, dass das molare Verhältnis von Ethylen zu Propylen im Rest R^{B6} mindestens 3 zu 1, vorzugsweise mindestens 5 zu 1 beträgt. Besonders bevorzugt handelt es sich beim Rest R^{B6} ausschließlich um Ethylen.

Rheologiesteuerungsmittel, welche die Reste R^{B6} aufweisen, besitzen eine besonders hohe Verträglichkeit in polaren Zubereitungen, insbesondere wenn es sich beim Rest R^{B6} um einen Ethylenrest handelt. Vorteilhaft für polare Zubereitungen ist es auch wenn n = 6 bis 13 beträgt. Besonders bevorzugt für den Einsatz in polaren Zubereitungen ist es wenn n = 6 bis 13 beträgt und R^{B6} für Ethylen steht. Derartige Rheologiesteuerungsmittel lassen sich vorzugsweise in polaren Zubereitungen, und besonders bevorzugt in wasserbasierten Zubereitungen einsetzen.

Bevorzugt enthalten die erfindungsgemäßen Rheologiesteuerungsmittel die Wirkstoffe (A) und (B), in Summe, zu 40 bis 100 Gew.-%, bezogen auf das Gesamtgewicht des Rheologiesteuerungsmittels, noch bevorzugter zur 55 bis 100 Gew.-%, besonders bevorzugt zu 65 bis 100 Gew.-% und ganz besonders bevorzugt 85 bis 100 Gew.-%, bezogen auf das Gesamtgewicht des erfindungsgemäßen Rheologiesteuerungsmittels. In einer besonders bevorzugten Ausführungsform besteht das erfindungsgemäße Rheologiesteuerungsmittel aus den Wirkstoffen (A) und (B). Unabhängig davon ist es bevorzugt, dass das gewichtsprozentuale Verhältnis des Wirkstoffs (A) zum Wirkstoff (B) 1:1,5 bis 10:1, noch bevorzugter 1:1,3 bis 9,3:1 und besonders bevorzugt 1:0,7 bis 6:1 beträgt.

Besonders bevorzugt sind die erfindungsgemäßen Rheologiesteuerungsmittel bei Raumtemperatur (25 °C) unter Normaldruck (1013 mbar) flüssig. Solche Rheologiesteuerungsmittel besitzen eine besonders gute Verarbeitbarkeit und müssen nicht erst in Lösungen überführt werden.

In einer besonders bevorzugten Ausführungsform des erfindungsgemäßen Rheologiesteuerungsmittel ist der Wirkstoff (A) zu 20 bis 90 Gew.-% und Wirkstoff (B) zu 10 bis 80 Gew.-% jeweils bezogen auf das Gesamtgewicht des Rheologiesteuerungsmittels enthalten.

In einer ganz besonders bevorzugten Ausführungsform des erfindungsgemäßen Rheologiesteuerungsmittel ist der Wirkstoff (A) zu 30 bis 90 Gew.-%, besser noch 50 bis 90 Gew.-% und Wirkstoff (B) zu 10 bis 70 Gew.-%, besser noch 10 bis 50 Gew.- %, jeweils bezogen auf das Gesamtgewicht des Rheologiesteuerungsmittels, enthalten.

Neben den oben genannten Wirkstoffen (A) und (B) können eine oder mehrere, von diesen Komponenten verschiedene Zusatzstoffkomponenten (Z) (hierin auch als Komponenten (Z) bezeichnet) enthalten sein. Generell gilt, dass alle nicht unter die Definitionen von (A) und (B) fallenden Komponenten als Komponente (Z) angesehen werden können.

So kann es sich bei Komponente (Z) um organische Lösemittel handeln. Derartige organische Lösemittel (ZL) sind vorzugsweise in einer Menge von weniger als 35 Gew.-%, noch bevorzugter weniger als 25 Gew.-%, insbesondere bevorzugt weniger als 10 Gew.-% und ganz besonders bevorzugt weniger als 5 Gew.-% bezogen auf das Gesamtgewicht des Rheologiesteuerungsmittels enthalten. Ist das Lösemittel (ZL) enthalten, so beträgt dessen Anteil vorzugsweise 1 bis 35 Gew.-%, besonders bevorzugt 1 bis 25 Gew.-%, ganz besonders bevorzugt 1 bis 10 Gew.-% bezogen auf das Gesamtgewicht des erfindungsgemäßen Rheologiesteuerungsmittels.

Es kommen alle aus dem Stand der Technik bekannten organischen Lösemittel (ZL) infrage, die sich chemisch inert gegenüber den weiteren Bestandteilen des erfindungsgemäßen Rheologiesteuerungsmittels verhalten. Das organische Lösemittel (ZL) kann insbesondere im Hinblick auf den späteren Anwendungsbereich der Rheologiesteuerungsmittel gewählt werden. Bei der Wahl eines entsprechenden Lösemittels (ZL) können somit Aspekte wie die Evaporationstemperatur unter den späteren Anwendungsbedingungen oder die chemische und/oder physikalische Verträglichkeit mit den Anwendungssystemen eine Rolle spielen. So ist es üblicherweise nicht erwünscht, dass die Lösemittel (ZL) chemisch gegenüber den Anwendungssystemen, in welche die Rheologiesteuerungsmittel einzuarbeiten sind, reaktiv sind oder zu deren Koagulation führen. Die Lösemittel (ZL) sind üblicherweise bei 25 °C flüssig. Dies gilt insbesondere in Gegenwart der anderen Bestandteile der Komposition. Werden Lösemittel (ZL) eingesetzt, so ist es bevorzugt, dass maximal drei, besonders bevorzugt maximal zwei voneinander verschiedene Lösemittel (ZL) eingesetzt werden. Ganz besonders bevorzugt wird nur ein Lösemittel (ZL) eingesetzt.

Besonders bevorzugt sind die Rheologiesteuerungsmittel frei von organischen Lösemitteln (ZL).

Die oben genannten prozentualen Grenzen für den Einsatz eines Lösemittels (ZL) gelten unabhängig von der Zahl der eingesetzten voneinander verschiedenen Lösemittel (ZL).

Vorzugsweise werden die Lösemittel (ZL) gewählt aus der Gruppe bestehend aus aliphatischen Kohlenwasserstoffen, cycloaliphatischen Kohlenwasserstoffen, Terpenen, Terpenoiden, aromatischen Kohlenwasserstoffen, Chlorkohlenwasserstoffen, Alkoholen, Ketonen, Estern, Glykolethern, Ethern, Amiden, Sulfonen, Sulfoxiden, Acetalen und Nitroalkanen. Beispiele geeigneter Lösemittel, die unter die vorgenannten Oberbegriffe fallen sind bei Kittel, Lehrbuch der Lacke und Beschichtungen, Band 4 "Lösemittel, Weichmacher und Additive", Zweite Auflage, S. Hirzel Verlag Stuttgart, 2007, insbesondere in der Tabelle 4.1.23 auf Seiten 81-85 genannt.

Vorzugsweise besitzen die Lösemittel (ZL) Molmassen von 32 bis 300 g/mol, vorzugsweise bis etwa 250 g/mol, besonders bevorzugt von 32 bis etwa 200 g/mol. Ganz besonders bevorzugt handelt es sich bei den Lösemitteln um monomere Verbindungen.

In einer Ausführungsform der Erfindung enthält das erfindungsgemäße Rheologiesteuerungsmittel als Zusatzstoffkomponenten (Z) 0,5 bis 4,0 Gew.-% eines Salzes (ZS), wobei 50 bis 100 Gew.-%, vorzugsweise 100 Gew.-% des Salzes (ZS) ein Alkali- oder Erdalkalimetallsalz oder ein Ammoniumsalz, bevorzugt ein Lithium-, Calcium- oder Magnesiumsalz, besonders bevorzugt ein Lithium- oder Calciumsalz ist, welches als Anion bevorzugt ein einwertiges Anion, insbesondere bevorzugt ein Halogenid, Pseudohalogenid, Formiat, Acetat und/oder Nitrat, ganz besonders bevorzugt ein Chlorid, Acetat und/oder Nitrat, als Gegenion besitzt.

Zu den Salzen (ZS) zählen auch sogenannte ionische Flüssigkeiten, die von den Lösemitteln (ZL) verschieden sind. Unter ionischen Flüssigkeiten werden im Rahmen der vorliegenden Erfindung organische Salze oder Gemische aus organischen Salzen verstanden, deren Schmelzpunkte unterhalb 80 °C liegen, vorzugsweise liegen deren Schmelzpunkte unter 50 °C, besonders bevorzugt unter 30 °C und ganz besonders bevorzugt unter 20 °C. Die hierin besonders bevorzugten ionischen Flüssigkeiten sind bei Raumtemperatur flüssig. Ganz besonders bevorzugt als Salze (ZS) einsetzbare ionische Flüssigkeiten sind beispielsweise die in WO 2010/063358 A1 beschriebenen ionischen Flüssigkeiten.

Enthält die Zusammensetzung als Salz (ZS) eine ionische Flüssigkeit, so ist diese vorzugsweise in einer Menge von 5 bis 50 Gew.-% enthalten.

Neben den oben genannten Komponenten (A), (B), (ZL) und (ZS) können eine oder mehrere, von diesen Komponenten verschiedene Komponenten (ZV) enthalten sein. Generell gilt, dass alle nicht unter die Definitionen von (A), (B), (ZL) und (ZS) fallenden Komponenten als Komponente (ZV) angesehen werden können.

Hierbei kann es sich beispielsweise um weitere monomere, oligomere oder polymere Substanzen (ZV) handeln.

Vorzugsweise sind 0 bis maximal 20 Gew.-%, besonders bevorzugt 0 bis 10 Gew.-% und ganz besonders bevorzugt 0 bis 5 Gew.-%, speziell bevorzugt 0 bis 3 Gew.-% an Komponenten (ZV) bezogen auf das Gesamtgewicht des Rheologiesteuerungsmittels enthalten. Vorzugsweise ist das Rheologiesteuerungsmittel frei von Komponente (ZV).

Völlig unabhängig von der auf das Gesamtgewicht des Rheologiesteuerungsmittels bezogenen bevorzugten Mengen an Komponenten (ZV) gilt, dass das Gewichtsverhältnis der die Komponente (B) bildenden Spezies zum Gesamtgewicht der die Komponente (ZV) bildenden Spezies vorzugsweise >1 : 0,5, besonders bevorzugt >1: 0,25 und ganz besonders bevorzugt >1 : 0,1 beträgt.

Enthält die Komponente (ZV) hydroxylgruppenhaltige Spezies, so beträgt deren Hydroxylzahl vorzugsweise weniger als 15 mg KOH/g. Vorzugsweise ist maximal eine Hydroxylgruppe in der jeweiligen Spezies enthalten. Ganz besonders bevorzugt enthält die Komponente (ZV) keine Hydroxylgruppen enthaltenden Spezies.

Die Komponente (ZV) ist vorzugsweise frei von sogenannten Vernetzungsmitteln. Vernetzungsmittel im Sinne dieser Erfindung sind insbesondere Polyisocyanate mit freien oder blockierten Isocyanatgruppen, Aminoharze, wie beispielsweise Melaminharze, Harnstoff-Formaldehyd-Harze und Benzoguanaminharze, Polyamine und Polyepoxide.

Die Zusatzstoffkomponenten (Z) besteht, sofern sie im Rheologiesteuerungsmittel eingesetzt wird, aus einer oder mehreren Spezies gewählt aus der Gruppe bestehend aus organischen Lösemitteln (ZL), Salzen (ZS) und weiteren monomeren, oligomeren oder polymeren Zusatzstoffen (ZV).

In einer bevorzugten Ausführungsform besteht das erfindungsgemäße Rheologiesteuerungsmittel, jeweils bezogen auf das Gesamtgewicht des Rheologiesteuerungsmittels aus
i. 20 bis 85 Gew.-% (A),
ii. 10 bis 65 Gew.-% (B),
iii. 0 bis 35 Gew.-% (ZL),
iv. 0,5 bis 4 Gew.-% (ZS), wenn (ZS) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder 5 bis 50 Gew.-% (ZS), wenn (ZS) für eine ionische Flüssigkeit steht,
v. 0 bis 20 Gew.-% (ZV).

In einer besonders bevorzugten Ausführungsform besteht das erfindungsgemäße Rheologiesteuerungsmittel, jeweils bezogen auf das Gesamtgewicht des Rheologiesteuerungsmittels aus
i. 30 bis 80 Gew.-% (A),
ii. 15 bis 60 Gew.-% (B),
iii. 0 bis 25 Gew.-% (ZL),
iv. 0,5 bis 4 Gew.-% (ZS), wenn (ZS) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder 5 bis 50 Gew.-% (ZS), wenn (ZS) für eine ionische Flüssigkeit steht,
v. 0 bis 10 Gew.-% (ZV).

In einer ganz besonders bevorzugten Ausführungsform besteht das erfindungsgemäße Rheologiesteuerungsmittel, jeweils bezogen auf das Gesamtgewicht des Rheologiesteuerungsmittels aus
i. 35 bis 75 Gew.-% (A),
ii. 20 bis 55 Gew.-% (B),
iii. 0 bis 25 Gew.-% (ZL),
iv. 0,5 bis 4 Gew.-% (ZS), wenn (ZS) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder
   5 bis 50 Gew.-% (ZS), wenn (ZS) für eine ionische Flüssigkeit steht,
v. 0 bis 5 Gew.-% (ZV).

Für alle vorgenannten Ausführungsformen, insbesondere die bevorzugten, besonders bevorzugten und ganz besonders bevorzugten gilt, dass vorzugsweise Komponenten (ZL) oder (ZV), insbesondere (ZL) und (ZV) nicht enthalten sind.

Für alle vorgenannten Ausführungsformen, insbesondere die bevorzugten, besonders bevorzugten und ganz besonders bevorzugten gilt, dass vorzugsweise Komponenten (ZL) als Spezies ausschließlich organische Lösemittel mit einem Molekulargewicht von bis zu 300 g/mol enthält.

Für alle vorgenannten Ausführungsformen, insbesondere die bevorzugten, besonders bevorzugten und ganz besonders bevorzugten gilt, dass die Komponente (ZV), sofern vorhanden und sofern sie hydroxylgruppenhaltige Spezies enthält, die Hydroxylzahl der Spezies vorzugsweise weniger als 15 mg KOH/g beträgt.

Vorzugsweise ist dann maximal eine Hydroxylgruppe in der jeweiligen Spezies enthalten. Ganz besonders bevorzugt enthält die Komponente (ZV) keine Hydroxylgruppen enthaltenden Spezies.

Für alle vorgenannten Ausführungsformen, insbesondere die bevorzugten, besonders bevorzugten und ganz besonders bevorzugten gilt, dass die Komponente (ZV) vorzugsweise frei von sogenannten Vernetzungsmitteln ist. Vernetzungsmittel im Sinne dieser Erfindung sind insbesondere Polyisocyanate mit freien oder blockierten Isocyanatgruppen, Aminoharze, wie beispielsweise Melaminharze, Harnstoff-Formaldehyd-Harze und Benzoguanaminharze, Polyamine und Polyepoxide.

Die erfindungsgemäßen Rheologiesteuerungsmittel können wie oben dargestellt neben den Bestandteilen (A), (B), (ZL) und (ZS) noch die vorgenannten weiteren Bestandteile (ZV) enthalten und bestehen in einem solchen Fall vorzugsweise aus den Bestandteilen (A), (B), (ZL), (ZS) und (ZV), wobei (ZL), (ZS) und (ZV) fakultativ sind. Die erfindungsgemäßen Rheologiesteuerungsmittel können somit auch aus den Bestandteilen (A), (B), (ZL) und (ZS) bestehen. Sie bestehen in einer bevorzugten Ausführungsform aus (A), (B) und (ZL) oder insbesondere (A), (B) und (ZS), und in einer ganz besonders bevorzugten Ausführungsform aus (A) und (B). Die vorgenannten bevorzugten und besonders bevorzugten Kombinationen der Bestandteile sind unabhängig von der spezifischen Ausführung der einzelnen Komponenten.

Die erfindungsgemäßen Rheologiesteuerungsmittel enthalten vorzugsweise weder Pigmente noch Füllstoffe. Unabhängig davon enthalten die erfindungsgemäßen Rheologiesteuerungsmittel vorzugsweise weniger als 5 Gew.-%, besonders bevorzugt weniger als 3 Gew.-% und ganz besonders bevorzugt weniger als 1 Gew.- % an Wasser bezogen auf das Gesamtgewicht des Rheologiesteuerungsmittels. Ganz besonders bevorzugt sind die Rheologiesteuerungsmittel im Wesentlichen wasserfrei.

Da die erfindungsgemäßen Rheologiesteuerungsmittel üblicherweise eine gute Lagerstabilität aufweisen sind die darin enthaltenen Bestandteile vorzugsweise einander gegenüber chemisch inert. Dies gilt insbesondere für die Komponenten (A), (B), (ZL), (ZS) und (ZV) untereinander.

Weiterer Gegenstand der Erfindung sind Zubereitungen umfassend 0,05 bis 10 Gew.-%, vorzugsweise 0,1 bis 9 Gew.-%, besonders bevorzugt 0,2 bis 5 Gew.-% und ganz besonders bevorzugt 0,5 bis 3 Gew.-% eines erfindungsgemäßen Rheologiesteuerungsmittels bezogen auf das Gesamtgewicht der Zubereitung, wobei die Zubereitung vorzugsweise gewählt wird aus der Gruppe bestehend aus Beschichtungsmittelzusammensetzungen, Kunststoffformulierungen, Pigmentpasten, Dichtstoffformulierungen, Kosmetika, Keramikformulierungen, Klebstoffformulierungen, Vergussmassen, Baustoffformulierungen, Schmierstoffen, Spachtelmassen, Druckfarben und Tinten sowie Hilfsmitteln zur Förderung von Erdöl und Erdgas.

Bei den Zubereitungen handelt es sich vorzugsweise um lösemittelhaltige oder lösemittelfreie, insbesondere nicht-wässrige Zubereitungen. Als "nicht-wässrig" im Sinne dieser Erfindung werden solche Zubereitungen verstanden, die einen Wassergehalt von weniger als 5 Gew.-%, vorzugsweise weniger als 2 Gew.-% bezogen auf das Gesamtgewicht der Zubereitung besitzen. Ganz besonders bevorzugt sind die Zubereitungen im Wesentlichen wasserfrei, das heißt sie enthalten allenfalls Spuren von Wasser, worunter Mengen von unterhalb 0,5 Gew.-% bezogen auf das Gesamtgewicht der Zubereitung verstanden werden.

In einer alternativen Ausführungsform handelt es sich um wässrige Zubereitungen. Darunter werden solche verstanden, die mindestens 15 Gew.-% vorzugsweise mindestens 40 Gew.-% an Wasser enthalten. Insbesondere in solchen Zubereitungen werden die erfindungsgemäßen Rheologiesteuerungsmittel vorteilhaft eingesetzt, welche als Reste R^{B4} Reste der Formel R^{B5}(O-R^{B6})ₙ im Rahmen der obigen Definitionen aufweisen, wobei R^{B6} ganz besonders bevorzugt für Ethylen steht.

Bei weiteren Ausführungsformen enthalten die erfindungsgemäßen Rheologiesteuerungsmittel weniger als 0,5 mol-%, besonders bevorzugt weniger als 0,2 mol-% und ganz besonders bevorzugt keine Isocyanatgruppen, bezogen auf die Gesamtmenge der Verbindungen gemäß den Formeln (A) und (B). Derartige Rheologiesteuerungsmittel neigen besonders wenig zu Nebenreaktionen und besitzen eine besonders gute Lagerstabilität.

Bei weiteren Ausführungsformen enthält die erfindungsgemäße Wirkstoffkombination weniger als 3 mol-% an Verbindungen gemäß Formel (C), vorzugsweise weniger als 2 mol-%, ganz besonders bevorzugt weniger als 1 mol-%, bezogen auf die Gesamtmenge an Verbindungen gemäß den Formeln (B) und Formel (C)

R^{B4}-O-C(=O)-NH-R^{B3}-NH-C(=O)-O-R^{B4} (C),

wobei R^{B3} und R^{B4} die Bedeutungen gemäß Formel (B) besitzen.

Die vorgenannte Verbindung gemäß Formel (C) beschreibt ein Nebenprodukt gebräuchlicher Syntheserouten. Es hat sich als vorteilhaft erwiesen die Menge dieses Nebenproduktes möglichst gering zu halten.

Weiterer Gegenstand der Erfindung ist auch ein Verfahren zur Herstellung eines erfindungsgemäßen Rheologiesteuerungsmittels, wobei
(a) mindestens ein Wirkstoff der allgemeinen Formel (B) hergestellt wird durch Umsetzung einer Verbindung der allgemeinen Formel (B')

   HNR^{B2}-(CH₂)ₓR^{B1}-(CH₂)ₓ-NR^{B2}-CO-NH-R^{B3}-NH-COOR^{B4} (B')

   mit einer Verbindung (B")

   R^{B4}OOC-NH-R^{B3}-NCO (B")

   worin
   der Rest R^{B1} ausgewählt wird aus der Gruppe der unsubstituierten, methyl- und/oder ethylsubstituierten Phenylen-, Naphthylen-, Phenanthrylen- und Anthracylengruppen,
   die Reste R^{B2} unabhängig voneinander für Wasserstoff oder Alkylreste mit 1 bis 3 Kohlenstoffatomen stehen,
   die Reste R^{B3} unabhängig voneinander für unsubstituierte, methyl- und/oder ethylsubstituierte Phenylen-, Naphthylen-, Phenanthrylen- und Anthracylengruppen stehen, und
   die Reste R^{B4} unabhängig voneinander ausgewählt werden aus der Gruppe bestehend aus linearen oder verzweigten Alkyl- oder Alkenylgruppen mit jeweils 7 bis 15 Kohlenstoffatomen und Resten R^{B5}(O-R^{B6})ₙ, worin der Rest R^{B5} für eine Alkylgruppe mit 1 bis 6 Kohlenstoffatomen steht, die n Reste R^{B6} unabhängig voneinander für Ethylen und/oder Propylen stehen und n = 2 bis 13 ist, und
   die Ziffern x unabhängig voneinander für 0, 1, 2 oder 3 stehen; und
(b1) die Herstellung des mindestens einen Wirkstoffs der allgemeinen Formel (B) in Gegenwart mindestens eines Wirkstoffs der Formel (A) erfolgt, oder
(b2) anschließend an die Herstellung des mindestens einen Wirkstoffs der allgemeinen Formel (B) mindestens ein Wirkstoff der Formel (A) mit dem Wirkstoff der Formel (B) vermischt wird.

Bei der obigen, aber auch weiteren Ausführungsformen des erfindungsgemäßen Herstellverfahrens erfolgt die Herstellung des Wirkstoffs gemäß Formel (B) vorzugsweise in Gegenwart ein Salzes eines Alkali- oder Erdalkalimetalls, bevorzugt des Lithiums, Magnesiums und Calciums. Insbesondere haben sich Lithiumsalze als vorteilhaft erwiesen. Vorzugsweise wird das Salz ausgewählt aus der Gruppe der Halogenide, Pseudohalogenide, Formiate, Acetate und Nitrate, besonders bevorzugt aus der Gruppe der Chloride und Nitrate. Beispiele von Alkalisalzen und Erdalkalisalzen, welche sich als besonders vorteilhaft erwiesen haben sind LiCI und LiNO₃.

Bei weiteren Ausführungsformen beträgt die Menge der Lithiumsalze in den erfindungsgemäßen Rheologiesteuerungsmitteln vorzugsweise mindestens 0,5 Gew.-%, bevorzugter mindestens 0,75 Gew.-%, noch bevorzugter mindestens 1,0 Gew.-%, und ganz besonders bevorzugt 1,5 Gew.-%, bezogen auf die Gesamtmenge an Wirkstoffen gemäß Formel (A) und Wirkstoffen gemäß Formel (B).

Bei weiteren Ausführungsformen wird die Verbindung gemäß Formel (B) hergestellt durch Reaktion einer Verbindung gemäß Formel (D)

O=C=N-R^{B3}-NH-C(=O)-O-R^{B4} (D)

mit einer Verbindung gemäß Formel (E)

NHR^{B2}-(CH₂)ₓ-R^{B1}-(CH₂)ₓ-NHR^{B2} (E),

wobei sämtliche Reste wie für die Formel (B) definiert sind.

Auch die Herstellung der Verbindungen gemäß Formel (D) kann mittels dem Fachmann geläufiger Verfahren erfolgen. Beispielsweise kann dies durch Umsetzung von Chlorkohlensäureestern mit Aminen oder von Isocyanaten mit Alkoholen geschehen. Als sehr vorteilhaft hat sich das Herstellverfahren unter Umsetzung von Isocyanaten mit Alkoholen erwiesen.

Beispielsweise kann die Verbindung gemäß Formel (D) hergestellt durch Reaktion einer Verbindung gemäß Formel (F)

O=C=N-R^{B3}-N=C=O (F)

mit einer Verbindung gemäß Formel (G)

H-O-R^{B4} (G),

wobei sämtliche Reste wie oben definiert sind.

Bei weiteren Ausführungsformen erfolgt die Herstellung der Verbindung gemäß Formel (D) unter Einsatz von ungefähr äquimolaren Mengen an Verbindungen gemäß Formel (F) und Formel (G). Vorzugsweise beträgt das Verhältnis der Verbindungen gemäß Formel (F) zu Verbindungen gemäß Formel (G) 1,25:1 bis 1:1,25, bevorzugter 1,15:1 bis 1:1,15, noch bevorzugter 1,07:1 bis 1:1,07. Insbesondere ist es bevorzugt, dass die Verbindungen gemäß Formel (F) und Formel (G) äquimolar eingesetzt werden. Dies bietet einen sehr effizienten Zugang zu den betreffenden Verbindungen, erfordert jedoch größte Sorgfalt bei der Reaktionsführung. Insbesondere hat es sich als vorteilhaft erwiesen die Reaktionstemperatur gering zu halten, vorzugsweise unter 45 °C, mehr bevorzugt unter 40 °C.

In einer weiteren Ausführungsform erfolgt die Herstellung der Verbindung gemäß Formel (D) unter Einsatz von Verbindungen gemäß Formel (F) und Formel (G), wobei ein molarer Überschuss der Verbindung gemäß Formel (F) zum Einsatz kommt. Vorzugsweise beträgt das molare Verhältnis der Verbindungen gemäß Formel (F) zu Verbindungen gemäß Formel (G) 4:1 bis 1,25:1, bevorzugter 3:1 bis 1,5:1, noch bevorzugter 2,5:1 bis 1,75:1, ganz besonders bevorzugt ca. 2:1.

Weiterer Gegenstand der Erfindung ist die Verwendung der erfindungsgemäßen Rheologiesteuerungsmittel zur Verdickung und/oder Thixotropierung von flüssigen Zubereitungen, insbesondere von Zubereitungen der oben und unten genannten Arten, die im Folgenden weiter spezifiziert werden.

Neben den vorgenannten Bestandteilen der Rheologiesteuerungsmittel können die Zubereitungen zusätzlich übliche Additive enthalten. Beispiele für Additive sind Antiblockmittel, Stabilisatoren, Antioxidantien, Pigmente, Netzmittel, Dispergiermittel, Emulgatoren, UV-Absorber, Radikalfänger, Slipadditive, Entschäumer, Haftvermittler, Verlaufmittel, Wachse, Nanoteilchen, filmbildende Hilfsmittel, Flammschutzmittel oder andere von der erfindungsgemäßen Komposition verschiedene Rheologiesteuerungsmittel. Bevorzugte Additive sind Netzmittel, Dispergiermittel und/oder Emulgatoren.

Bei den Lacken, Druckfarben und Tinten, wie beispielsweise Inkjet-Tinten kann es sich sowohl um lösemittelhaltige als auch lösemittelfreie oder wasserbasierte Lacke, Druckfarben und Tinten handeln. Lacke sind in unterschiedlichsten Anwendungsfeldern einsetzbar, unter anderem im Bereich der Automobillacke, Bautenlacke, Schutzlacke (u.a. Lackierung von Schiffen und Brücken), Can- und Coil-Coating-Lacke, Holz- und Möbellacke, Industrielacke, Kunststofflacke, Drahtlacke, Beschichtungen von Lebensmitteln und Saatgut sowie auch als sogenannte Color Resists, welche für Farbfilter beispielsweise in LC-Displays sowie E-Inks eingesetzt werden. Der Anwendungsbereich der Beschichtungsmittel, insbesondere der Lacke umfasst auch pastöse Materialien, welche in der Regel einen sehr hohen Anteil von Feststoff und einen geringen Anteil von flüssigen Komponenten aufweisen und der Herstellung der Beschichtungsmittel dienen, beispielsweise sogenannte Pigmentpasten oder auch Pasten auf Basis von feinverteilten Metallteilchen oder Metallpulvern (beispielsweise auf Basis von Silber, Kupfer, Zink, Aluminium, Bronze, Messing).

Bei den Kunststoff-Formulierungen kann es sich um die (flüssigen) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind daher ungesättigte Polyesterharze, Vinylesterharze, Acrylatharze, Epoxidharze, Polyurethanharze, Formaldehydharze (wie Melamin-Formaldehyd-Harze oder Harnstoff-Formaldehyd-Harze). Diese können unter unterschiedlichsten Bedingungen ausgehärtet werden, so z.B. bei Raumtemperatur (kalthärtende Systeme) oder bei erhöhter Temperatur (heißhärtende Systeme), gegebenenfalls auch unter Aufbringung von Druck ("Closed Mold"-Applikation, Sheet Molding Compound oder Bulk Molding Compound). Zu den bevorzugten Kunststoff-Formulierungen zählen auch PVC-Plastisole.

Bei den Kosmetikzubereitungen kann es sich um mannigfaltige flüssige Kompositionen handeln, die im sogenannten Personal Care- oder auch Health Care-Bereich eingesetzt werden, so z.B. Lotionen, Cremes, Pasten (z.B. Zahnpasta), Schäume (z.B. Rasierschaum), Gele (z.B. Rasiergel, Duschgel, Arzneiwirkstoffe in gelförmiger Formulierung), Haarshampoo, Flüssigseifen, Nagellacke, Lippenstifte und Haarfärbemittel.

Bei den Baustoff-Formulierungen kann es sich um bei Verarbeitung flüssige oder pastöse Materialien handeln, die im Bausektor eingesetzt werden und nach Aushärtung fest werden, so z.B. hydraulische Bindemittel wie Beton, Zement, Mörtel, Fliesenkleber und Gips.

Bei den Schmierstoffen handelt es sich um Mittel, welche zur Schmierung eingesetzt werden, das heißt die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe und Schmierfette bevorzugt sind. Auch Gleitmittel und Bohrspülmittel ("drilling fluids", wie sie in der Erdölförderung eingesetzt werden) zählen definitionsgemäß zu den Schmierstoffen.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Klebstoffe können lösemittelhaltig, lösemittelfrei oder wasserbasiert sein.

Die nachfolgenden Beispiele dienen der zusätzlichen Erläuterung der vorliegenden Erfindung, ohne jedoch als Einschränkung verstanden werden zu dürfen.

### Herstellung und anwendungstechnische Prüfung der als Rheologiesteuerungsmittel geeigneten Wirkstoffkombinationen

### Herstellung der Wirkstoffe des Typs (A):

### Herstellung von n-Propylbutyrolactam:

In einem Autoklaven mit Rührer wurden 60,0 g (1 mol) n-Propylamin vorgelegt und auf 60 °C erwärmt. Innerhalb von 45 Minuten wurden unter Rühren mit 86,0 g (1 mol) Butyrolacton zugegeben. Die Temperatur stieg hierbei auf 95 °C. Man rührt noch 4 Stunden bei 90 °C nach. Das Reaktionsgemisch wurde hiernach in einen Rundkolben mit Rührer, Rückflusskühler, Wasserabscheider und Tropftrichter überführt und auf 100 °C erwärmt. Unter Rühren wurde anschließend stündlich die Temperatur um 15 °C erhöht. Die Nachreaktion erfolgte zusätzlich für 10 Stunden bei 200 °C. Während der gesamten Reaktionszeit wurde das entstehende Reaktionswasser abdestilliert.

Es wurde hellgelbe Flüssigkeit mit einer Aminzahl von 4 mg KOH/g erhalten. Das Reaktionsprodukt wurde durch Destillation mittels eines Dünnschichtverdampfers bei 120 °C und <1 mbar aufgereinigt.

### Herstellung von n-Pentylbutyrolactam:

In einem Reaktionsgefäß (Rundkolben mit Rührer, Rückflusskühler, Wasserabscheider und Tropftrichter) wurden unter Stickstoffatmosphäre bei 60 °C 104,4 g (1,2 mol) n-Pentylamin vorgelegt. Innerhalb von 35 Minuten wurden unter Rühren 86,0 g (1,0 mol) Butyrolacton zugetropft. Die Temperatur stieg dabei auf 80 °C. Die Temperatur wurde für 2 Stunden auf 110 °C, anschließend für 4 Stunden auf 200 °C, danach für 7 Stunden auf 230 °C erhöht und dabei das entstehende Reaktionswasser kontinuierlich abdestilliert. Nach beendeter Reaktionszeit war eine niedrigviskose gelbbräunliche Flüssigkeit mit einer Aminzahl von 4,5mg KOH/g entstanden. Das Reaktionsprodukt wurde durch Destillation mittels eines Dünnschichtverdampfers bei 120 °C und <1 mbar aufgereinigt. Die Aminzahl war danach <1 mg KOH/g.

### Herstellung von n-Hexylbutyrolactam (nicht erfindungsgemäßes Vergleichsbeispiel):

In einem Reaktionsgefäß (Rundkolben mit Rührer, Rückflusskühler, Wasserabscheider und Tropftrichter) wurden unter Stickstoffatmosphäre bei 60 °C 121,0 g (1,2 mol) n-Hexylamin vorgelegt. Innerhalb von 45 Minuten wurden unter Rühren 86,0g (1,0 mol) Butyrolacton zugetropft. Die Temperatur stieg dabei auf 75 °C. Die Temperatur wurde für 2 Stunden auf 110 °C, anschließend für 4 Stunden auf 200 °C, danach für 7 Stunden auf 230 °C erhöht und dabei das entstehende Reaktionswasser kontinuierlich abdestilliert. Nach beendeter Reaktionszeit war eine klare orange Flüssigkeit mit einer Aminzahl von 4,5 mg KOH/g und einer Hydroxylzahl von 12,4 mg KOH/g entstanden. Das Reaktionsprodukt wurde durch Destillation mittels eines Dünnschichtverdampfers bei 120 °C und <1 mbar aufgerein igt.

### Herstellung der erfindungsgemäßen Wirkstoffkombinationen und einer Vergleichskombination

### Beispiel 1

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflusskühler versehen. Es werden 64,5 g Propylbutyrolactam vorgelegt und unter Stickstoffatmosphäre unter Rühren auf 120 °C erwärmt. 5,1 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein leicht trübes, gelbliches und viskoses Produkt erhalten. Die Aminzahl liegt bei 5,2 mg KOH/g (bestimmt gemäß DIN 16945). Das Produkt enthält 52 Gew.-% des Wirkstoffs (B).

### Beispiel 2

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflusskühler versehen. Es werden 118,2 g Pentylbutyrolactam vorgelegt und unter Stickstoffatmosphäre unter Rühren auf 120 °C erwärmt. 4,2 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Die Aminzahl liegt bei 3,6 mg KOH/g (bestimmt gemäß DIN 16945). Das Produkt enthält 38 Gew.-% des Wirkstoffs (B)

### Vergleichsbeispiel 1

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflusskühler versehen. Es werden 72,7 g Ethylbutyrolactam vorgelegt und unter Stickstoffatmosphäre unter Rühren auf 120 °C erwärmt. 4,2 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945). Das Produkt enthält 49 Gew.-% des Wirkstoffs (B) jedoch keinen Wirkstoff (A), stattdessen jedoch Ethylbutyrolactam.

### Vergleichsbeispiel 2

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflusskühler versehen. Es werden 72,7 g Methylbutyrolactam vorgelegt und unter Stickstoffatmosphäre unter Rühren auf 120 °C erwärmt. 4,2 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein klares, gelbes Produkt erhalten. Das Produkt enthält 49 Gew.-% des Wirkstoffs (B) jedoch keinen Wirkstoff (A), stattdessen jedoch Methylbutyrolactam.

### Vergleichsbeispiel 3

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflusskühler versehen. Es werden 118,2 g Hexylbutyrolactam vorgelegt und unter Stickstoffatmosphäre unter Rühren auf 120 °C erwärmt. 4,2 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Die Aminzahl liegt bei 3,1 mg KOH/g (bestimmt gemäß DIN 16945). Das Produkt enthält 38 Gew.-% des Wirkstoffs (B), jedoch keinen Wirkstoff (A), stattdessen jedoch Hexylbutyrolactam.

### Prüfsystem zur Beurteilung der Gelstärke und der Trübung

Für diese Prüfserie werden - falls erforderlich - durch Zugabe einer weiteren Menge der jeweiligen Verbindung vom Typ (A) (bzw. bei den nicht erfindungsgemäßen Vergleichsbeispielen der jeweils enthaltenen Verbindung Methylbutyrolactam bzw. Ethylbutyrolactam) zur Komposition für alle geprüften Produkte ein Gehalt der Harnstoffverbindung (B) von 38 Gew.-% in der Additivkomposition eingestellt.

In einer 100 ml-Glasflasche werden 50 g der Lösungsmittelmischung bestehend aus n-Butylacetat/Dowanol PM 75:25 (w/w) vorgelegt und anschließend das jeweilige Additiv unter Rühren mit einem Dissolver des Typs Dispermat CV (Zahnscheibe d = 2,5 cm bei 1000 U/min.) eingearbeitet. Es wurde dabei in allen Fällen eine Dosierung gewählt, welche 0,5 Gew.-% des Wirkstoffs (B) (bezogen auf die gesamte Masse an Butylacetat und Dowanol PM) entspricht. Nach erfolgter Zugabe wird noch 1 Minute weitergerührt.

Anschließend lässt man die Proben 1 Stunde bei Raumtemperatur stehen und beurteilt anschließend visuell die Gelstärke als Maß für die rheologische Wirksamkeit und die Verträglichkeit des Additivs im System anhand der Trübung.

Für die Gelstärke gilt hierbei folgende Bewertungsskala: 1 (sehr stark), 2 (stark), 3 (mittel), 4 (sehr schwach) und 5 (kein Gel). Für die Beurteilung der Trübung (Verträglichkeit) gilt folgende Skala: 1 (klar), 2 (leicht trüb), 3 (trüb), 4 (stark trüb) und 5 (sehr stark trüb). Sowohl für die Gelstärke als auch die Trübung gilt daher, dass niedrige Werte auf der jeweiligen Skala vorteilhaft sind.

**Tabelle 1**

| **Produkt** | **Wirkstoff (A)** | **Gelstärke** | **Trübung** |
|---|---|---|---|
| ohne Rheologiesteuerungsmittel | - | 5 | 1 |
| Vergleichsbeispiel 1 | Ethyl butyrolactam* | 4 | 1 - 2 |
| Beispiel 1 | Propyl butyrolactam | 1-2 | 1 |
| Beispiel 2 | Pentylbutyrolactam | 1 | 1 |
| Vergleichsbeispiel 3 | Hexylbutyrolactam* | 2-3 | 2 |

| | | | |
|---|---|---|---|
| *kein erfindungsgemäßer Wirkstoff (A) | | | |

In der Tabelle 1 ist erkennbar, dass die nicht erfindungsgemäßen Vergleichsbeispiele 1 und 3 eine deutlich schlechtere Gelstärke besitzt als die erfindungsgemäßen Beispiele 1 und 2.

### Prüfsystem zur Beurteilung des Standvermögens:

Analog zur obigen Prüfserie werden - falls erforderlich - durch Zugabe einer weiteren Menge der jeweiligen Verbindung vom Typ (A) (bzw. bei den nicht erfindungsgemäßen Vergleichsbeispielen der jeweils enthaltenen Verbindung Methylbutyrolactam bzw. Ethylbutyrolactam) zur Komposition für alle geprüften Produkte ein Gehalt der Harnstoffverbindung (B) von 38 Gew.-% in der Additivkomposition eingestellt.

In einer 150 ml Glasflasche werden 75,0 g Epikote 1001-Dickschichtformulierung (Komponente 1) vorgelegt und anschließend das jeweilige Additiv unter Rühren mit dem Dispermat CV (Zahnscheibe d = 2,5 cm bei 1000 U/min.) eingearbeitet. Es wurde dabei in allen Fällen eine Dosierung gewählt, welche 1,0 Gew.-% des Wirkstoffs (B) (bezogen auf den Gesamtlack) entspricht. Nach erfolgter Zugabe wird noch 1 Minute weitergerührt. Anschließend lässt man die Proben 1 Tag bei 25 °C stehen und beurteilt nach Einarbeitung des Härters (Komponente 2) das Standvermögen als Maß der rheologischen Wirksamkeit. Hierzu wird die Probe zunächst 5 min auf einem Andalok-Rüttler (Modell "Natalie") geschert. Direkt nach der Scherung erfolgt die Applikation mit der Stufenrakel (Modell: Erichsen 421/S, Schichtdicken 50-500 µm sowie 550-1000 µm) und einer automatischen Aufziehbank von BYK-Gardner bei einer Geschwindigkeit von 5 cm/s auf Kontrastkarten. Nach der Applikation werden die Kontrastkarten direkt horizontal zur Trocknung aufgehängt. Nach der Trocknung wird die Schichtdicke in "µm nass" bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit nach Scherbelastung.

### Rezeptur:

**Komponente 1:**

| | |
|---|---|
| Epikote 1001-X-75¹ | 42,7 |
| BYK-052² | 0,3 |
| Bayferrox 130 M³ | 5,0 |
| Blanc Fixe N⁴ | 38,0 |
| *50 °C, 30 min., 8500 U.*/*min., 4cm Zahnscheibe* | |
| Methyl isobutyl keton / iso-Butanol (7:3) | 14,0 |
| | 100,0 |

| | |
|---|---|
| ¹Bisphenol A-Harz, gelöst in Xylol (Hexion Specialty Chemicals) ²Silikonfreier Entschäumer auf Polymerbasis (Byk Chemie GmbH) ³mikronisiertes Eisenoxid-Rot-Pigment (Lanxess) ⁴synthetisches Bariumsulfat (Sachtleben) | |

| | |
|---|---|
| Komponente 2: | |
| Epikure 3115-X-70⁵ | 15,0 |
| | 115,0 |

| | |
|---|---|
| ⁵Lösung eines Polyamid-Härters in Xylol (Momentive) | |

**Tabelle 2**

| **Produkt** | **Standvermögen (µm nass)** |
|---|---|
| | |
| ohne Rheologiesteuerungsmittel | 150 |
| Vergleichsbeispiel 1* | 450 |
| Vergleichsbeispiel 2* | 450 |
| Beispiel 2 | 600 |

| | |
|---|---|
| *enthalten keine erfindungsgemäßen Wirkstoffe (A) | |

In der Tabelle 2 ist erkennbar, dass die nicht erfindungsgemäßen Vergleichsbeispiele 1 und 2 ein schlechteres Standvermögen (d.h. eine geringere maximale Schichtdicke) ermöglichen als das erfindungsgemäße Produkt des Beispiels 2.

## Patentansprüche

1. Rheologiesteuerungsmittel, umfassend
10 bis 95 Gew.-% mindestens eines Wirkstoffs der allgemeinen Formel (A) 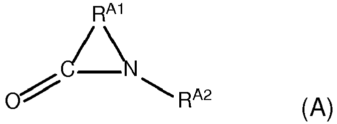 worin
R^{A1} für einen zweibindigen, gesättigten, acyclischen, unsubstituierten oder methylsubstituierten Rest steht, der durch die Bindung an den Rest O=C-N-R^{A2} einen Ring mit 5 bis 8 Ringatomen bildet, und der Rest R^{A2} eine Alkylgruppe mit 3 bis 5 Kohlenstoffatomen darstellt,
und
5 bis 90 Gew.-% mindestens eines Wirkstoffs der allgemeinen Formel (B)
R^{B4}OOC-NH-R^{B3}-NH-CO-NR^{B2}-(CH₂)ₓ-R^{B1}-(CH₂)ₓ- NR^{B2}-CO-NH-R^{B3}-NH-COOR^{B4} (B)
worin
der Rest R^{B1} ausgewählt wird aus der Gruppe der unsubstituierten, methyl- und/oder ethylsubstiuierten Phenylen-, Naphthylen-, Phenanthrylen- und Anthracylengruppen, die Reste R^{B2} unabhängig voneinander für Wasserstoff oder Alkylreste mit 1 bis 3 Kohlenstoffatomen stehen,
die Reste R^{B3} unabhängig voneinander für unsubstituierte, methyl- und/oder ethylsubstituierte Phenylen-, Naphthylen-, Phenanthrylen- und Anthracylengruppen stehen, und
die Reste R^{B4} unabhängig voneinander ausgewählt werden aus der Gruppe bestehend aus linearen oder verzweigten Alkyl- oder Alkenylgruppen mit jeweils 7 bis 15 Kohlenstoffatomen und Resten R^{B5}(O-R^{B6})ₙ, worin der Rest R^{B5} für eine Alkylgruppe mit 1 bis 6 Kohlenstoffatomen steht, die n Reste R^{B6} unabhängig voneinander für Ethylen und/oder Propylen stehen und n = 2 bis 13 ist, und
die Ziffern x unabhängig voneinander für 0, 1, 2 oder 3 stehen, und die prozentualen Angaben auf das Gesamtgewicht des Rheologiesteuerungsmittels bezogen sind.

2. Rheologiesteuerungsmittel gemäß Anspruch 1, wobei der Rest R^{A1} wenigstens ein Kohlenstoffatom als Ringatom enthält, welches methylsubstituiert ist.

3. Rheologiesteuerungsmittel gemäß Anspruch 1, wobei R^{A1} unsubstituiert ist.

4. Rheologiesteuerungsmittel gemäß einem der Ansprüche 1 bis 3, wobei der Rest R^{A1} höchstens ein Sauerstoffatom als Ringatom enthält und dieses nicht direkt an den Rest O=C-N-R^{A2} gebunden ist.

5. Rheologiesteuerungsmittel gemäß einem der Ansprüche 1 bis 4, wobei der Rest R^{A1} ausschließlich Kohlenstoffatome als Ringatome enthält.

6. Rheologiesteuerungsmittel gemäß einem der Ansprüche 1 bis 5, wobei R^{A1} mit den Gruppen O=C und N-R^{A2} einen Ring mit 5 bis 7 Ringatomen bildet.

7. Rheologiesteuerungsmittel gemäß einem der Ansprüche 1 bis 6, wobei R^{A1} ein Kohlenwasserstoffrest ist, der durch höchstens ein Sauerstoffatom als Ringatom unterbrochen ist.

8. Rheologiesteuerungsmittel gemäß einem der Ansprüche 1 bis 7, wobei R^{B1} eine unsubstituierte oder methylsubstituierte Phenylen- oder Naphthylengruppe ist.

9. Rheologiesteuerungsmittel gemäß einem der Ansprüche 1 bis 8, wobei die Ziffern x unabhängig voneinander für 0 oder 1 stehen.

10. Rheologiesteuerungsmittel gemäß einem der Ansprüche 1 bis 9, wobei die Reste R^{B4} unabhängig voneinander ausgewählt werden aus der Gruppe bestehend aus linearen Alkylgruppen mit jeweils 7 bis 15 Kohlenstoffatomen und Resten R^{B5}(O-R^{B6})ₙ, worin der Rest R^{B5} für eine Alkylgruppe mit 1 bis 4 Kohlenstoffatomen steht, die n Reste R^{B6} unabhängig voneinander für Ethylen und/oder Propylen stehen und n = 2 bis 13 ist.

11. Rheologiesteuerungsmittel gemäß Anspruch 1, wobei
der Rest R^{A1} ein unsubstituierter oder methylsubstituierter Alkylenrest ist, der durch die Bindung an den Rest O=C-N-R^{A2} einen Ring mit 5 oder 6 Ringatomen bildet,
der Rest R^{B1} eine unsubstituierte oder methylsubstituierte Phenylen- oder Naphthylengruppe ist,
die Reste R^{B2} unabhängig voneinander für Wasserstoff, Methyl oder Ethyl stehen, die Reste R^{B3} unabhängig voneinander für unsubstituierte oder methylsubstituierte Phenylen- oder Naphthylengruppen stehen, und
die Reste R^{B4} unabhängig voneinander ausgewählt werden aus der Gruppe bestehend aus linearen oder verzweigten Alkylgruppen mit jeweils 7 bis 15 Kohlenstoffatomen und Resten R^{B5}(O-R^{B6})ₙ, worin der Rest R^{B5} für eine Alkylgruppe mit 1 bis 4 Kohlenstoffatomen steht, die n Reste R^{B6} unabhängig voneinander für Ethylen und/oder Propylen stehen und n = 2 bis 13 ist.

12. Rheologiesteuerungsmittel gemäß einem der Ansprüche 1 bis 11, wobei das molare Verhältnis von Ethylen zu Propylen im Rest R^{B6} mindestens 3 zu 1 beträgt.

13. Rheologiesteuerungsmittel gemäß einem der Ansprüche 1 bis 12, wobei dieses die Wirkstoffe (A) und (B), in Summe, zu 40 bis 100 Gew.-%, bezogen auf das Gesamtgewicht des Rheologiesteuerungsmittels, enthält.

14. Rheologiesteuerungsmittel gemäß einem der Ansprüche 1 bis 13, wobei das gewichtsprozentuale Verhältnis des Wirkstoffs (A) zum Wirkstoff (B) 1:1,5 bis 10:1 beträgt.

15. Rheologiesteuerungsmittel gemäß einem der Ansprüche 1 bis 14, wobei Wirkstoff (A) zu 20 bis 90 Gew.-% und Wirkstoff (B) zu 10 bis 80 Gew.-% jeweils bezogen auf das Gesamtgewicht des Rheologiesteuerungsmittels enthalten sind.

16. Rheologiesteuerungsmittel gemäß einem oder mehreren der Ansprüche 1 bis 15, enthaltend eine Komponente (Z), die von den Komponenten (A) und (B) verschieden ist und gewählt wird aus der Gruppe bestehend aus organischen Lösemitteln (ZL), Salzen (ZS) und weiteren monomeren, oligomeren oder polymeren, von (ZL) und (ZS) verschiedenen Zusatzstoffen (ZV).

17. Rheologiesteuerungsmittel gemäß Anspruch 16, wobei die Komponente (ZV), bezogen auf das Gesamtgewicht des Rheologiesteuerungsmittels zu 0 bis 20 Gew.- % enthalten ist.

18. Rheologiesteuerungsmittel gemäß einem oder mehreren der Ansprüche 16 oder 17, wobei die Komponenten (ZV) frei von Vernetzungsmitteln gewählt aus der Gruppe bestehend aus Polyisocyanaten mit freien oder blockierten Isocyanatgruppen, Aminoharzen, Polyaminen und Polyepoxiden ist.

19. Rheologiesteuerungsmittel gemäß einem oder mehreren der Ansprüche 16 bis 18, wobei die Komponente (ZV) als hydroxylgruppenhaltige Spezies nur solche Spezies enthält, die eine Hydroxylzahl von weniger als 15 mg KOH/g aufweisen.

20. Rheologiesteuerungsmittel gemäß einem oder mehreren der Ansprüche 1 bis 19, wobei dieses, bezogen auf das Gesamtgewicht weniger als 5 Gew.-% Wasser enthält.

21. Rheologiesteuerungsmittel gemäß einem oder mehreren der Ansprüche 1 bis 20, wobei dieses frei von Pigmenten und Füllstoffen ist.

22. Rheologiesteuerungsmittel gemäß einem oder mehreren der Ansprüche 1 bis 21, wobei die Komponenten (A), (B), (ZL), (ZS) und (ZV) chemisch inert gegenüber einander sind.

23. Zubereitungen umfassend 0,05 bis 10 Gew.-% eines Rheologiesteuerungsmittels gemäß einem der Ansprüche 1 bis 22, bezogen auf das Gesamtgewicht der Zubereitung, wobei die Zubereitung gewählt wird aus der Gruppe bestehend aus Beschichtungsmittelzusammensetzungen, Kunststoffformulierungen, Pigmentpasten, Dichtstoffformulierungen, Kosmetika, Keramikformulierungen, Klebstoffformulierungen, Vergussmassen, Baustoffformulierungen, Schmierstoffen, Spachtelmassen, Druckfarben und Tinten sowie Hilfsmitteln zur Förderung von Erdöl und Erdgas.

24. Verfahren zur Herstellung eines Rheologiesteuerungsmittels gemäß einem der Ansprüche 1 bis 22, wobei
(a) mindestens ein Wirkstoff der allgemeinen Formel (B) hergestellt wird durch Umsetzung einer Verbindung der allgemeinen Formel (B')
HNR^{B2}-(CH₂)ₓ-R^{B1}-(CH₂)ₓ- NR^{B2}-CO-NH-R^{B3}-NH-COOR^{B4} (B')
mit einer Verbindung (B")
R^{B4}OOC-NH-R^{B3}-NCO (B")
worin
der Rest R^{B1} ausgewählt wird aus der Gruppe der unsubstituierten, methyl- und/oder ethylsubstiuierten Phenylen-, Naphthylen-, Phenanthrylen- und Anthracylengruppen,
die Reste R^{B2} unabhängig voneinander für Wasserstoff oder Alkylreste mit 1 bis 3 Kohlenstoffatomen stehen,
die Reste R^{B3} unabhängig voneinander für unsubstituierte, methyl- und/oder ethylsubstituierte Phenylen-, Naphthylen-, Phenanthrylen- und Anthracylengruppen stehen, und
die Reste R^{B4} unabhängig voneinander ausgewählt werden aus der Gruppe bestehend aus linearen oder verzweigten Alkyl- oder Alkenylgruppen mit jeweils 7 bis 15 Kohlenstoffatomen und Resten R^{B5}(O-R^{B6})ₙ, worin der Rest R^{B5} für eine Alkylgruppe mit 1 bis 6 Kohlenstoffatomen steht, die n Reste R^{B6} unabhängig voneinander für Ethylen und/oder Propylen stehen und n = 2 bis 13 ist, und
die Ziffern x unabhängig voneinander für 0, 1, 2 oder 3 stehen; und
(b1) die Herstellung des mindestens einen Wirkstoffs der allgemeinen Formel (B) in Gegenwart mindestens eines Wirkstoffs der Formel (A) erfolgt, oder
(b2) anschließend an die Herstellung des mindestens einen Wirkstoffs der allgemeinen Formel (B) mindestens ein Wirkstoff der Formel (A) mit dem Wirkstoff der Formel (B) vermischt wird.

25. Verwendung der Rheologiesteuerungsmittel gemäß einem der Ansprüche 1 bis 22 zur Verdickung oder Thixotropierung von lösemittelhaltigen, lösemittelfreien, wässrigen oder nicht-wässrigen Zubereitungen.

## Claims

1. Rheology control agent, comprising
10 to 95 % by weight of at least one active agent of the general formula (A) 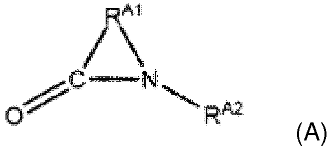 wherein
R^{A1} represents a saturated, acyclic, unsubstituted or methyl-substituted radical with two bonds which forms a ring with 5 to 8 ring atoms by binding to a radical O=C-N-R^{A2}, and the radical R^{A2} represents an alkyl group with 3 to 5 carbon atoms,
and
from 5 to 90 % by weight of at least one active agent of the general formula (B)
R^{B4}OOC-NH-R^{B3}-NH-CO-NR^{B2}-(CH₂)ₓ-R^{B1}-(CH₂)ₓ-NR^{B2}-CO-NH-R^{B3}-NH-COOR^{B4} (B)
wherein
the radical R^{B1} is selected from the group of unsubstituted, methyl- and/or ethyl-substituted phenylene, naphthylene, phenanthrylene and anthracylene groups,
the radicals R^{B2} independently of one another represent hydrogen or alkyl radicals with 1 to 3 carbon atoms,
the radicals R^{B3} independently of one another represent unsubstituted, methyl- and/or ethyl-substituted phenylene, naphthylene, phenanthrylene and anthracylene groups, and
the radicals R^{B4} independently of one another are selected from the group consisting of linear or branched alkyl or alkenyl groups with 7 to 15 carbon atoms each, and the radicals R^{B5}(O-R^{B6})ₙ, wherein the radical R^{B5} represents an alkyl group with 1 to 6 carbon atoms, the n radicals R^{B6} independently of one another represent ethylene and/or propylene, and n = 2 to 13, and the numbers x independently of one another represent 0, 1, 2 or 3, and the percentages given are based on the total weight of the rheology control agent.

2. The rheology control agent according to claim 1, wherein the radical R^{A1} contains at least one carbon atom that is methyl-substituted as the ring atom.

3. The rheology control agent according to claim 1, wherein R^{A1} is unsubstituted.

4. The rheology control agent according to any one of claims 1 to 3, wherein the radical R^{A1} contains at most one oxygen atom as ring atom, and this ring atom is not directly bound to the radical O=C-N-R^{A2}.

5. The rheology control agent according to any one of claims 1 to 4, wherein the radical R^{A1} contains only carbon atoms as ring atoms.

6. The rheology control agent according to any one of claims 1 to 5, wherein the radical R^{A1} forms a ring with the groups O=C and N-R^{A2}, the ring having 5 to 7 ring atoms.

7. The rheology control agent according to any one of claims 1 to 6, wherein R^{A1} is a hydrocarbon radical that is interrupted by at most one oxygen atom as ring atom.

8. The rheology control agent according to any one of claims 1 to 7, wherein R^{B1} is an unsubstituted or methyl-substituted phenylene or naphthylene group.

9. The rheology control agent according to any one of claims 1 to 8, wherein the numbers x independently of one another represent 0 or 1.

10. The rheology control agent according to any one of claims 1 to 9, wherein the radicals R^{B4} are independently of one another selected from the group consisting of linear alkyl groups having 7 to 15 carbon atoms each, and radicals R^{B5}(O-R^{B6})ₙ, wherein the radical R^{B5} represents an alkyl group with 1 to 4 carbon atoms,
the n radicals R^{B6} independently of one another represent ethylene and/or propylene, and n = 2 to 13.

11. The rheology control agent according to claim 1, wherein
the radical R^{A1} is an unsubstituted or methyl-substituted alkylene radical that forms a ring with 5 or 6 ring atoms by binding to the radical O=C-N-R^{A2},
the radical R^{B1} is an unsubstituted or methyl-substituted phenylene or naphthylene group,
the radicals R^{B2} independently of one another represent hydrogen, methyl or ethyl,
the radicals R^{B3} independently of one another represent unsubstituted or methyl-substituted phenylene or naphthylene groups, and
wherein the radicals R^{B4} are independently of one another selected from the group consisting of linear or branched alkyl groups having 7 to 15 carbon atoms each, and radicals R^{B5}(O-R^{B6})ₙ, wherein the radical R^{B5} represents an alkyl group with 1 to 4 carbon atoms, and the radicals R^{B6} independently of one another represent ethylene and/or propylene, and n = 2 to 13.

12. The rheology control agent according to any one of claims 1 to 11, wherein the molar ratio of ethylene and propylene in the radical R^{B6} is at least 3 to 1.

13. The rheology control agent according to any one of claims 1 to 12, the rheology control agent containing the active agents (A) and (B) in a total of 40 to 100 % by weight, with respect to the total weight of the rheology control agent.

14. The rheology control agent according to any one of claims 1 to 13, wherein the proportion, in percent by weight, of the active agent (A) and the active agent (B) is 1 : 1.5 to 10 : 1.

15. The rheology control agent according to any one of claims 1 to 14, wherein the active agent (A) is present in an amount from 20 to 90 % by weight, and the active agent (B) in an amount from 10 to 80 % by weight, with respect to the total weight of the rheology control agent, respectively.

16. The rheology control agent according to any one or several of claims 1 to 15, containing a component (Z) different from the components (A) and (B), selected from the group consisting of organic solvents (ZL), salts (ZS) and additional monomeric, oligomeric or polymeric additives (ZV) different from (ZL) and (ZS).

17. The rheology control agent according to claim 16, wherein the component (ZV) is contained in an amount of 0 to 20 % by weight with respect to the total weight of rheology control agent.

18. Rheology control agent according to any one or several of claims 16 or 17, wherein the components (ZV) are free from cross-linking agents selected from the group consisting of polyisocyanates with free or blocked isocyanate groups, amino resins, polyamines and polyepoxides.

19. The rheology control agent according to any one or several of claims 16 to 18, wherein the component (ZV) contains only those species as a hydroxyl group containing species that have a hydroxyl number of less than 15 mg KOH/g.

20. The rheology control agent according to any one or several of claims 1 to 19, the rheology control agent containing less than 5 % by weight water with respect to the total weight.

21. The rheology control agent according to any one or several of claims 1 to 20, the rheology control agent being free from pigments and fillers.

22. The rheology control agent according to any one or several of claims 1 to 21, wherein the components (A), (B), (ZL), (ZS) and (ZV) chemically inert to each other.

23. Preparations comprising 0.05 to 10 % by weight, with respect to the total weight of the preparation, of a rheology control agent according to any one of claims 1 to 22, wherein the preparation is selected from the group consisting of coating agent compositions, plastics formulations, pigment pastes, sealing agent formulations, cosmetics, ceramics formulations, adhesive formulations, casting/potting masses, formulations for construction materials, lubricants, putty masses, printing inks and inks, as well as additives for the production of petroleum and natural gas.

24. A method for the production of a rheology control agent according to any one of claims 1 to 22, wherein
(b) at least one active agent of the general formula (B) is fabricated by reacting a compound of the general formula (B')
HNR^{B2}-(CH₂)ₓ-R^{B1}-(CH₂)ₓ-NR^{B2}-CO-NH-R^{B3}-NH-COOR^{B4} (B')
with a compound (B")
R^{B4}OOC-NH-R^{B3}-NCO (B")
wherein
the radical R^{B1} is selected from the group of unsubstituted, methyl- and/or ethyl-substituted phenylene, naphthylene, phenanthrylene and anthracylene groups,
the radicals R^{B2} independently of one another represent hydrogen or alkyl radicals with 1 to 3 carbon atoms,
the radicals R^{B3} independently of one another represent unsubstituted, methyl- and/or ethyl-substituted phenylene, naphthylene, phenanthrylene and anthracylene groups, and
the radicals R^{B4} independently of one another are selected from the group consisting of linear or branched alkyl or alkenyl groups with 7 to 15 carbon atoms each, and the radicals R^{B5}(O-R^{B6})ₙ, wherein the radical R^{B5} represents an alkyl group with 1 to 6 carbon atoms, the n radicals R^{B6} independently of one another represent ethylene and/or propylene, and n = 2 to 13, and
the numbers x independently of one another represent 0, 1, 2 or 3; and
(b1) the production of the at least one active agent of the general formula (B) occurs in the presence of at least one active agent of the formula (A), or
(b2) subsequent to the production of the at least one active agent of the general formula (B), at least one active agent of the formula (A) is mixed with the active agent of the formula (B).

25. Use of the rheology control agent according to any one of claims 1 to 22 for thickening or imparting thixotrophy to preparations that contain solvents or are free from solvents, or aqueous or non-aqueous preparations.

## Revendications

1. Agent de contrôle de la rhéologie, comportant
10 à 95 % en poids d'au moins un agent actif de la formule générale (A) 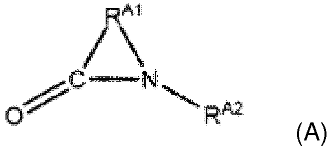 dans lequel
R^{A1} représente un radical saturé, acyclique, non substitué ou substitué par méthyle, à deux liaisons. formant un cycle avec 5 à 8 atomes de cycle par liaison au radical O=C-N-R^{A2} et le radical R^{A2} représente un groupe alkyle avec 3 à 5 atomes de carbone,
et
5 à 90 % en poids d'au moins un agent actif de la formule générale (B)
R^{B4}OOC-NH-R^{B3}-NH-CO-NR^{B2}-(CH₂)ₓ-R^{B1}-(CH₂)ₓ-NR^{B2}-CO-NH-R^{B3}-NH-COOR^{B4} (B)
dans lequel
le radical R^{B1} est choisi dans le groupe des groupements phénylene, naphtylène, phénanthrylène et anthracylène non substitués ou substitués par méthyle et/ou éthyle,
les radicaux R^{B2} indépendamment l'un de l'autre représentent hydrogène ou des radicaux alkyle avec 1 à 3 atomes de carbone,
les radicaux R^{B3} indépendamment l'un de l'autre représentent des groupements phénylène, naphtylène, phénanthrylène et anthracylène non substitués ou substitués par méthyle et/ou éthyle, et
les radicaux R^{B4} indépendamment l'un de l'autre sont choisis dans le groupe consistant en des groupements alkyle ou alkènyle linéaires ou ramifiés avec respectivement 7 à 15 atomes de carbone, et des radicaux R^{B5}(O-R^{B6})ₙ, dans lequel le radical R^{B5} représente un groupe alkyle avec 1 à 6 atomes de carbone, les n radicaux R^{B6} indépendamment l'un de l'autre représentent l'éthylène et/ou le propylène, et n = 2 à 13 est, et les nombres x indépendamment l'un de l'autre représentent 0, 1, 2 ou 3, les percentages étant indiqués par rapport au poids total de l'agent de contrôle de la rhéologie.

2. Agent de contrôle de la rhéologie selon la revendication 1, dans lequel le radical R^{A1} contient au moins un atome de carbone en tant qu'atome de cycle substitué par méthyle.

3. Agent de contrôle de la rhéologie selon la revendication 1, dans lequel R^{A1} est non substitué.

4. Agent de contrôle de la rhéologie selon l'une quelconque des revendications 1 à 3, dans lequel le radical R^{A1} contient au plus un atome d'oxygène en tant qu'atome de cycle et celui-ci n'est pas directement lié au radical O=C-N-R^{A2}.

5. Agent de contrôle de la rhéologie selon l'une quelconque des revendications 1 à 4 dans lequel le radical R^{A1} contient seulement des atomes de carbone en tant qu'atomes de cycle.

6. Agent de contrôle de la rhéologie selon l'une quelconque des revendications 1 à 5, dans lequel R^{A1} forme un cycle ayant 5 to 7 atomes de cycle avec les groupements O=C et N-R^{A2}.

7. Agent de contrôle de la rhéologie selon l'une quelconque des revendications 1 à 6, dans lequel R^{A1} est un radical hydrocarbure interrompu par au plus un atome d'oxygène en tant qu'atome cyclique.

8. Agent de contrôle de la rhéologie selon l'une quelconque des revendications 1 à 7, dans lequel R^{B1} est un groupement phénylène ou naphthylène non substitué ou substitué par méthyle.

9. Agent de contrôle de la rhéologie selon l'une quelconque des revendications 1 à 8, dans lequel les nombres x indépendamment l'un de l'autre représentent 0 ou 1.

10. Agent de contrôle de la rhéologie selon l'une quelconque des revendications 1 à 9, dans lequel les radicaux R^{B4} sont indépendamment l'un de l'autre choisis dans le groupe consistant en des groupements alkyle linéaires avec respectivement 7 à 15 atomes de carbone, et des radicaux R^{B5}(O-R^{B6})ₙ, dans lequel le radical R^{B5} représente un groupe alkyle avec 1 à 4 atomes de carbone, est les n radicaux R^{B6} indépendamment l'un de l'autre représentent l'éthylène et/ou le propylène, et n = 2 à 13.

11. Agent de contrôle de la rhéologie selon la revendication 1, dans lequel
le radical R^{A1} est un radical alkylène non substitué ou substitué par méthyle formant un cycle avec 5 ou 6 atomes de cycle par liaison au radical O=C-N-R^{A2},
le radical R^{B1} est un groupement phénylène ou naphthylène non substitué ou substitué par méthyle,
les radicaux R^{B2} indépendamment l'un de l'autre représentent hydrogène, méthyle ou éthyle,
les radicaux R^{B3} indépendamment l'un de l'autre représentent des groupements phénylène ou naphthylène non substitués ou substitués par méthyle, et
les radicaux R^{B4} sont indépendamment l'un de l'autre choisis dans le groupe consistant en des groupements alkyle linéaires ou ramifiés avec respectivement 7 à 15 atomes de carbone, et des radicaux R^{B5}(O-R^{B6})ₙ, dans lequel le radical R^{B5} représente un groupe alkyle avec 1 à 4 atomes de carbone, et les n radicaux R^{B6} indépendamment l'un de l'autre représentent l'éthylène ou le propylène et n = 2 à 13.

12. Agent de contrôle de la rhéologie selon l'une quelconque des revendications 1 à 11, dans lequel le rapport molaire de l'éthylène au propylène dans le radical R^{B6} est au moins 3 : 1.

13. Agent de contrôle de la rhéologie selon l'une quelconque des revendications 1 à 12, l'agent contenant les agents actifs (A) et (B) en somme avec 40 à 100 % en poids par rapport au poids total de l'agent de contrôle de la rhéologie.

14. Agent de contrôle de la rhéologie selon l'une quelconque des revendications 1 à 13, dans lequel le rapport en pourcentage en poids de l'agent actif (A) et l'agent actif (B) est 1 : 1,5 à 10 : 1.

15. Agent de contrôle de la rhéologie selon l'une quelconque des revendications 1 à 14, dans lequel l'agent actif (A) est contenu dans une quantité de 20 à 90 % en poids et l'ingrédient actif (B) est contenu dans une quantité de 10 à 80 % en poids, respectivement par rapport au poids total de l'agent de contrôle de la rhéologie.

16. Agent de contrôle de la rhéologie selon une ou plusieurs des revendications 1 à 15, contenant un composant (Z) qui est différent des composants (A) et (B) et qui est choisi dans le groupe consistant en des solvants organiques (ZL), des sels (ZS) et d'autres additifs monomères, oligomères ou polymères (ZV) autres que (ZL) et (ZS).

17. Agent de contrôle de la rhéologie selon la revendication 16, dans lequel le composant (ZV) est contenu dans une quantité de 0 à 20 % en poids par rapport au poids total de l'agent de contrôle de la rhéologie.

18. Agent de contrôle de la rhéologie selon une ou plusieurs des revendications 16 ou 17, dans lequel les composants (ZV) sont exempts d'agents de réticulation choisis dans le groupe consistant en des polyisocyanates ayant des groupes isocyanate libres ou bloqués, des résines aminées, des polyamines et des polyépoxydes.

19. Agent de contrôle de la rhéologie selon une ou plusieurs des revendications 16 à 18, dans lequel le composant (ZV), en tant qu'espèce contenant des groupes hydroxyle, ne contient que de telles espèces ayant un indice d'hydroxyle inférieur à 15 mg de KOH/g.

20. Agent de contrôle de la rhéologie selon une ou plusieurs des revendications 1 à 19, contenant moins de 5 % en poids d'eau par rapport au poids total.

21. Agent de contrôle de la rhéologie selon une ou plusieurs des revendications 1 à 20, l'agent étant exempte de pigments ou remplisseurs.

22. Agent de contrôle de la rhéologie selon une ou plusieurs des revendications 1 à 21, dans lequel les composants (A), (B), (ZL), (ZS) et (ZV) sont chimiquement inertes les uns par rapport aux autres.

23. Préparations comprenant 0,05 à 10 % en poids, par rapport au poids total de la préparation, d'un agent de contrôle de la rhéologie selon l'une quelconque des revendications 1 à 22, la préparation étant choisie dans le groupe constitué par les compositions de revêtement, les formulations de matières plastiques, les pâtes pigmentaires, les formulations de produits d'étanchéité, les cosmétiques, les formulations de céramiques, les formulations d'adhésifs, les masses de coulée, les formulations de matériaux de construction, les lubrifiants, les mastics, les couleurs d'imprimerie et encres, et les additifs pour la production de pétrole brut et de gaz naturel.

24. Procédé pour la fabrication d'un agent de contrôle de la rhéologie selon l'une quelconque des revendications 1 à 22, dans lequel
(b) au moins un agent actif de la formule générale (B) est fabriqué par réaction d'un composé de la formule générale (B')
HNR^{B2}-(CH₂)ₓ-R^{B1}-(CH₂)ₓ-NR^{B2}-CO-NH-R^{B3}-NH-COOR^{B4} (B')
avec un composé (B")
R^{B4}OOC-NH-R^{B3}-NCO (B")
dans lequel
le radical R^{B1} est choisi dans le groupe des groupements phénylene, naphtylène, phénanthrylène et anthracylène non substitués ou substitués par méthyle et/ou éthyle,
les radicaux R^{B2} indépendamment l'un de l'autre représentent hydrogène ou des radicaux alkyle avec 1 à 3 atomes de carbone,
les radicaux R^{B3} indépendamment l'un de l'autre représentent des groupements phénylène, naphtylène, phénanthrylène et anthracylène non substitués ou substitués par méthyle et/ou éthyle, et
les radicaux R^{B4} indépendamment l'un de l'autre sont choisis dans le groupe consistant en des groupements alkyle ou alkènyle linéaires ou ramifiés avec respectivement 7 à 15 atomes de carbone, et des radicaux R^{B5}(O-R^{B6})ₙ, dans lequel le radical R^{B5} représente un groupe alkyle avec 1 à 30 atomes de carbone, les n radicaux R^{B6} indépendamment l'un de l'autre représentent l'éthylène et/ou le propylène, et n = 2 à 13 est, et
les nombres x indépendamment l'un de l'autre représentent 0, 1, 2 ou 3; et
(b1) la fabrication de l'au moins un agent actif de la formule générale (B) est effectué en présence d'au moins un agent actif de la formule (A), ou
(b2) suite à la fabrication de l'au moins un agent actif de la formule générale (B), au moins un agent actif de la formule (A) est mélangé avec l'agent actif de la formule (B).

25. Utilisation de l'agent de contrôle de la rhéologie selon l'une quelconque des revendications 1 à 22, pour épaissir ou rendre thixotropiques des préparations à base de solvants, sans solvant, aqueuses ou non aqueuses.
